# EUROPEAN PATENT APPLICATION

(11) **EP 3 819 263 A1**
(43) Date of publication of application: **12.05.2021**
(21) Application number: 19207031.6
(22) Date of filing: 05.11.2019
(51) Int. Cl.: C02F 1/32

(54) **DEVICE FOR UV-TREATMENT OF AQUEOUS FLUID**

(71) Applicant: Unilever IP Holdings B.V., 3013 AL Rotterdam (NL)
(72) Inventor: Sandeep Kumar, Yadav, Mumbai 400 099 (IN)
(74) Representative: Reijns, Tiemen Geert Pieter

(57) **Abstract**

The device of present invention comprises a housing, an ultraviolet lamp contained within the housing; an ultraviolet transmissive tube positioned adjacent to the ultraviolet lamp in the housing for the passage of aqueous fluid therethrough; a top cover and a bottom cover; an inlet located at one end of housing; a streamlining module in fluid communication with the inlet, and fan outlet for discharging aqueous fluid located at the other end of the housing. It is highly preferable that the UV lamp runs through the length of the housing for maximum UV exposure to the aqueous fluid. The device and method of the present invention offers the advantage to effectively disinfect aqueous fluid at high throughput

## Description

### TECHNICAL FIELD OF THE INVENTION

The invention relates to a device for disinfecting aqueous fluid by exposing the fluid to ultraviolet (UV) light. More particularly, the invention relates to such a device which is capable of disinfecting aqueous fluid even at high flow rates.

The invention further provides a method for disinfecting aqueous in a UV-treatment device.

### BACKGROUND OF THE INVENTION

UV treatment of water is a quick, reliable and cost effective method of disinfecting water for both point of use and point of entry. UV water treatment uses ultraviolet light to kill micro-organisms that may be present in water. It is a proven technology that has no significant drawbacks. In some applications, its initial cost is a bit more than chlorination, but because of its low operating cost, it quickly pays for itself. It is environmentally friendly and essentially trouble-free. Most ultraviolet water treatment systems require only an annual change of lamp and a periodic change of the filter cartridge.

Devices for point-of-use UV-water treatment are commercially available. These devices have in common that water flows through a UV tank assembly past a source of UV-light. Depending on how the water is directed through the UV tank assembly, portions of the water flow may receive different UV-exposure. That is, portions of water that pass most quickly through the UV tank assembly tend to receive less UV light exposure than portions of water that take a slower path and have a longer residence time.

Ideally, all the water would receive the same predetermined minimum dosage of UV light to ensure a desired kill or destruction rate without unnecessarily overexposing certain portions of the water flow. Without steady or plug flow through the UV tank assembly, this objective cannot be optimally met. Plug flow refers to a "plug" or mass of water moving together through the system. Plug flow avoids uneven flow rate of water through the system.

US 2007/0045561 discloses methods and apparatuses for the treatment of liquids and gases using ultraviolet light. In one embodiment, a substantially enclosed chamber coated with a reflective material containing an ultraviolet lamp and an ultraviolet transmissive tube running through the chamber for the treatment of liquid passed therethrough is disclosed.

Such apparatuses however do not work well at high flow rates of entering aqueous fluid as it does not get exposure for enough time to ensure disinfection.

Our Co-pending Application WO17186510 solves this problem by providing a device (1) for disinfecting aqueous fluid by exposing the fluid to ultraviolet (UV) light, said device (1) comprising: a tubular UV-Iamp; a treatment chamber (21) comprising a cylindrical outer wall (11), said treatment chamber (21) providing a passage for conveying aqueous fluid and providing exposure to UV-light emitted by the UV lamp; a top cover (14) and a bottom cover (13); ∼ an Streamlining module (22) located at one end of the treatment chamber (21), ∼ an outlet (16) for discharging aqueous fluid located at the other end of the treatment chamber (21); wherein the Streamlining module (22) comprises: - an inlet (15) for receiving aqueous fluid; - an annular diffuser passage that is in fluid communication with the inlet (15) for receiving aqueous fluid and that is in fluid communication with the treatment chamber (21) through an inner annular slit opening (32) and an outer annular slit opening (33), said outer annular slit opening (33)being located adjacent the outer wall of the treatment chamber (21) and said inner annular slit opening (32) being located concentrically within the outer annular slit opening (33);and - a cover plate (31), which separates the annular diffuser passage from the treatment chamber (21) and defines the inner annular slit opening (32) and the outer annular slit opening (33).The UV-treatment device (1) of the present invention is extremely efficient at disinfecting aqueous fluid, even at very high throughput.

The problem with the device of WO17186510 is that, it is that it is very bulky as the housing has to be of an extruded material and custom made, as the aqueous fluid flows through it and needs to be watertight. This also increases the cost of manufacture of the device. There is therefore a need to have a less bulky device, with ease of manufacturing and at reasonable expense for disinfecting aqueous fluid. The difficulty in manufacturing and the high costs leads to increase in the costs of treatment devices providing purified aqueous fluids such as water and therefore not affordable for the low-income segment, whereas it is the endeavor of the applicants to be able to provide purified water at affordable costs to the masses.

### SUMMARY OF THE INVENTION

The present inventors have designed a device for UV-treatment of aqueous fluid that is extremely efficient in disinfecting said aqueous fluid, even at very high throughput.

The UV-treatment of aqueous fluid in the present device is very effective because the geometry of the devices ensures that exposure time to UV radiation is constant throughout the stream of aqueous fluid that is treated in the device.
First aspect of the present invention provides a for disinfecting aqueous fluid by exposing the fluid to ultraviolet light, said device comprising:
   - a housing,
   - an ultraviolet lamp contained within the housing;
   - an ultraviolet transmissive tube positioned adjacent to the ultraviolet lamp in the housing for the passage of aqueous fluid therethrough;
   - a top cover and a bottom cover;
   - an inlet located at one end of housing;
   - a streamlining module in fluid communication with the inlet,
   - an outlet for discharging aqueous fluid located at the other end of the housing;
      wherein the streamlining module comprises:
      - an opening for entry of water through the inlet;
      - inter-engageable parts A and B;
         ∘ part A comprising a base and a first hollow stem,
            wherein the base comprises a top face and a bottom face, the bottom face rests on the opening so as to allow passage of water from the opening only through the streamlining module and wherein, the top face covers the UV transmissive tube to allow passage of water into the UV transmissive tube only through the streamlining module; and wherein first hollow stem forms an extension of the inlet;
            wherein the first hollow stem vertically extends upwards and comprises an outer and an inner wall,
         ∘ part B comprising a base and a second hollow stem having outer and inner walls, vertically extending downwards from base, shaped to receive the first hollow stem; and
         ∘ an obstructer to prevent engagement of part A and part B in a manner which blocks flow of water through the streamlining module.
Second aspect of the present invention provides a method of disinfecting aqueous fluid in a device according to the first aspect, said method comprising the steps of:
   - introducing a linear stream of aqueous fluid through the device inlet for aqueous fluid into the opening of the streamlining module and through the first hollow stem;
   - allowing the aqueous fluid flowing upwards from the first hollow stem to be obstructed by the base of part B and overflow from the first hollow stem and fall on the base of part A and proceed linearly up into the ultraviolet transmissive tube through cross sectional area A6;
   - exposing the stream of aqueous fluid to UV-light from the UV lamp as it flows through the ultraviolet transmissive tube; and
   - discharging the disinfected aqueous fluid from the outlet.
Third aspect of the present invention provides use of the device according to the first aspect for providing purified water.

### DRAWINGS

Figure 1 is an exploded of the UV-treatment device according to the present invention.
Figure 2 is an exploded view depicting positioning of the streamlining module.
Figure 3 is the exploded view Part A of the streamlining module.
Figure 4 is the exploded view Part B of the streamlining module.
Figure 5 is the cross-sectional view of the UV-treatment device according to the present invention.
Figure 6 is the cross-sectional view of the part of the device where streamlining module is positioned and the Cross sections A1 to A6 are created.
Figure 7 is an exploded view of the embodiment of the device having two UV-transmissive tubes.

### DETAILED DESCRIPTION OF THE INVENTION

Accordingly, one aspect of the present invention relates to a device for disinfecting aqueous fluid by exposing the fluid to ultraviolet (UV) light, said device comprising:
- a housing,
- an ultraviolet lamp contained within the housing;
- an ultraviolet transmissive tube positioned adjacent to the ultraviolet lamp in the housing for the passage of aqueous fluid therethrough;
- a top cover and a bottom cover;
- an inlet located at one end of housing;
- a streamlining module in fluid communication with the inlet,
- an outlet for discharging aqueous fluid located at the other end of the housing;
   wherein the streamlining module comprises:
   - an opening for entry of water through the inlet;
   - inter-engageable parts A and B;
      ∘ part A comprising a base and a first hollow stem,
         wherein the base comprises a top face and a bottom face, the bottom face rests on the opening so as to allow passage of water from the opening only through the streamlining module and wherein, the top face covers the UV transmissive tube to allow passage of water into the UV transmissive tube only through the streamlining module; and
         wherein first hollow stem forms an extension of the inlet;
         wherein the first hollow stem vertically extends upwards and comprises an outer and an inner wall, ,
      ∘ part B comprising a base and a second hollow stem having outer and inner walls, vertically extending downwards from base, shaped to receive the first hollow stem;
      ∘ an obstructer to prevent engagement of part A and part B in a manner which blocks flow of water through the streamlining module.

It should be understood that the present invention is not limited in its application to the details of construction and the arrangement of components set forth in the following description or illustrated in the following drawings. The invention is capable of other embodiments and of being implemented in various ways.

The terms "including", "comprising", "containing" or "having" and variations thereof as used herein are meant to encompass the items listed thereafter as well as additional items. Unless specified or limited otherwise, the terms "mounted," "connected," "supported," and "coupled" and variations thereof are used broadly and encompass direct and indirect mountings, connections, supports, and couplings.

### Device

As explained herein before, the present UV-treatment device offers the important advantage that it achieves plug flow in the UV transmissive tube, thanks to the special design of the streamlining module. Accordingly, in a particularly preferred embodiment, the streamlining module provides plug flow to the aqueous fluid entering the UV transmissive tube.

The device of present invention comprises a housing, an ultraviolet lamp contained within the housing; an ultraviolet transmissive tube positioned adjacent to the ultraviolet lamp in the housing for the passage of aqueous fluid therethrough; a top cover and a bottom cover; an inlet located at one end of housing; a streamlining module in fluid communication with the inlet, and an outlet for discharging aqueous fluid located at the other end of the housing. It is highly preferable that the UV lamp runs through the length of the housing for maximum UV exposure to the aqueous fluid.

The device of the present invention advantageous not only in terms of its efficiency but also convenience and cost of manufacture and is also compact and less bulky as compared to similar devices and that of WO17186510. These advantages were achieved by the design of the present invention which allows water to pass through the UV transmissive tube from the inlet via the streamlining module. This feature allows to have a housing which need not be watertight, this is because water only flows through the UV transmissive tube in the housing and it is only the passage of water from inlet to outlet through the UV transmissive tube that needs to be water tight. This allows the housing to be made of any material/shape and even of a rolled metal sheet which is easily customizable as compared to the device of WO17186510 where the housing has to be cast in a mould which increases the manufacturing complexity and costs and also makes it bulky.

Housing of the device mainly functions to enclose the UV transmissive tube and the UV lamp and can be made of any material such as polymer, metal, alloy and any such material able to hold shape such as polyfetrafluoroethylene (PTFE), expanded polytetrafluoro- ethylene (ePTFE), or other similar plastics; or coated, anodized, or polished aluminum. It is preferred that inner side of the housing has a surface which is reflective. The inner wall of the housing which faces the UV transmissive tube and the UV lamp is preferably either made of a reflective material or coated with a reflective material. The reflective material which may be coated on the inside of the housing may a reflector such as a difluse or specular reflector. Any type of specular reflector, in any type of shape, may be used. In any form, the reflective material when used should preferably have a high level of reflectivity. The reflectivity level of the reflective material is preferably in the range of 80 percent to 100 percent, and more preferably, 90 percent to 100 percent. Although reflectivity of the inner wall of the housing chamber is not essential but it can be said that reflectivity helps in higher efficacy of UV light and therefore, higher the reflectivity higher is the efficiency of the UV lamp in treating water.

The housing could be of any shape preferably, cuboidal or cylindrical or ellipsoidal, more preferably cuboidal or cylindrical and most preferably cylindrical.

A top cover and a bottom cover are provided to cover the housing from either sides and protect the enclosures and also provide inlet and outlet into the housing or more particularly to the UV transmissive tube.

An inlet located at one end of housing and an outlet for discharging aqueous fluid located at the other end of the housing. It is preferable that the streamlining module is positioned at the end proximate to the inlet. It is also possible to have another streamlining module at the end proximate to outlet of the housing.

It is preferred that the streamlining module, the part A and the part B are all either coaxial or positioned on a parallel axis with the ultraviolet transmissive tube

### Ultraviolet lamp

The device of the present invention comprises a UV-Iamp preferably mounted mechanically and electrically in sockets that are connected to a driving circuit so that an alternating voltage can be applied. The driving circuit draws its input power from a power source such as a mains voltage or a battery.

The ultraviolet lamp may be of any type useful for providing ultraviolet radiation. For example, low pressure mercury lamps, medium pressure mercury lamps, excimer lamps, flashlamps with xenon and other fill mixtures, and microwave-driven lamps may be used with the present embodiment. The ultraviolet lamp provides at least one wavelength less than 400 nm to a target for the deactivation or killing of biological materials therein.

The UV lamp may be in any shape; however, it is preferable that the lamp is positioned such that the aqueous fluid flowing in the UV transmissive tube gets maximum exposure to the UV light. It is more preferable that the UV lamp is positioned adjacent to the UV transmissive tube and further preferably parallelly to the length of UV transmissive tube.

### Ultraviolet transmissive tube

The ultraviolet transmissive tube may be of any material that is substantially transmissive to ultraviolet light. To achieve maximum efficiency of the UV treatment, it is preferable for the ultraviolet transmissive tube material to near 100 percent transmissivity as possible. In cases where 100 percent transmissivity is not possible, materials such as fused silica (Heraeus Heralux, GE Quartz Supersil), fluorine doped silica (Asahi Glass AQX), and sapphire (Saphikon EFG sapphire), being generally higher than 80 percent transmissive in the wavelengths below 300 nm, are useful.

According to a particularly preferred embodiment, the ultraviolet transmissive tube of the UV-treatment device is positioned adjacent to the UV-Iamp and more preferably parallelly to the UV lamp for maximum exposure to the UV light.

### Streamlining module

The UV device of the present invention comprises a streamlining module preferably positioned proximate to the inlet of the device. The streamlining module comprises:
- an opening for entry of water through the inlet;
- inter-engageable parts A and B;
   ∘ part A comprising a base and a first hollow stem,
      wherein the base comprises a top face and a bottom face, the bottom face rests on the opening so as to allow passage of water from the opening only through the streamlining module and wherein, the top face covers the UV transmissive tube to allow passage of water into the UV transmissive tube only through the streamlining module; and wherein first hollow stem forms an extension of the inlet,
      wherein the first hollow stem vertically extends upwards and comprises an outer and an inner wall;
   ∘ part B comprising a base and a second hollow stem having outer and inner walls, vertically extending downwards from base, shaped to receive the first hollow stem; and
   ∘ an obstructer to prevent engagement of part A and part B in a manner which blocks flow of water through the streamlining module.

The obstructer of the streamlining module is designed in such a manner that prevents engagement of part A and part B to block flow of water through the streamlining module. In other words, the obstructer could be any component of the streamlining module which allows flow of water therethrough.

The obstructer could be a ring or protrusion or depression or dent at junction of base of part A and foot of first hollow stem. The obstructer could also be positioned at the edge of first or the second hollow stem forming an extension of either of the stems. The obstructer could also be inherently present in the shape of the streamlining module which allows passage of water through it. It is not necessary that obstructer is a separate component. In fact, it is preferable that obstructer is inherent in the design of the streamlining module.

It is most preferable that the obstructer is positioned at junction on the base of part A and at foot of the outer wall of the first hollow stem, such that the second hollow stem rests on the obstructer.

It is preferred that the opening of the stopper module is walled with a sleeve which forms a seat of the base of the part A of the stopper. It is more preferable that the sleeve comprises a gasket.

It is preferred that the top face of the base of part A buts opening of the UV transmissive tube such that water is allowed into the UV transmissive tube only through the streamlining module.

The top face of part A is such that it is able to butt or rest on the opening of UV transmissive tube It is preferred that when the UV transmissive tube is cylindrical in shape, the top face of part A is preferably disc or cylindrical in shape and when the UV transmissive tube is cuboidal in shape, the top face of part A is preferably cuboidal in shape.

The base of part A could be of any shape, preferably cuboidal or cylindrical or disc shape, it is highly preferred that it is disc shaped.

The base of part B could be of any shape, preferably cuboidal or cylindrical or disc shape, it is highly preferred that it is disc shaped.

It is preferred that base of part B has a top and bottom face, wherein the second hollow stem vertically extends downwards from bottom face.

It is further preferred that the surface area of the bottom face of part A is greater than surface area of the top face of base of part B.

Hollow stem of part A could be of any shape, preferably cuboidal or cylindrical shape or any other shape which acts as a male plug corresponding to the hollow stem of Part B which also could be of any shape as long as it acts as a female receptacle for the hollow stem of part A.

It is preferable that part A and part B of the streamlining module are tightly engaged with each other such that they do not disengage with the flow of aqueous fluid during the course of UV treatment of the aqueous fluid.

It is preferable that in the device of the present invention shortest cross section of the opening of the streamlining module has a cross sectional area A1.

It is preferable that in the device of the present invention shortest cross section of the hollow of first stem has a cross sectional area A2.

It is preferable that in the device of the present invention shortest cross section of junction formed between the first stem and the base of part B has a cross sectional area A3.

It is preferable that in the device of the present invention shortest cross section between the outer wall of the first hollow stem and inner wall of the second hollow stem has a cross sectional area A4.

It is preferable that in the device of the present invention shortest cross section between the second hollow stem and the base of the part A has a cross sectional area A5.

It is preferable that in the device of the present invention shortest cross section between base of part B and inner wall of the ultraviolet transmissive tube has a cross sectional area A6.

It is highly preferred that in the device of the present invention A1 ≤ A2, A3, A4, A5 and A6. It is further preferred that A2 is ≥ A1, A3 is ≥ A2, A4 is ≥ A3, A5 is ≥ A4, A6 is ≥ A5.

It most preferred that the cross sections increase from A1 to A6, wherein A1 is the smallest.

The dimensions of the cross sections play a role on streamlining the flow of water and control the velocity of aqueous fluid without affecting the flow rate of the fluid.

The present invention provides adequate exposure of the aqueous fluid to the UV light by providing a unique flow path to the aqueous fluid even at a high flow rates.

### Method

The present invention provides a method of disinfecting aqueous fluid in a UV-treatment device comprising the steps of:
- introducing a linear stream of aqueous fluid through the device inlet for aqueous fluid into the opening of the streamlining module and through the first hollow stem;
- allowing the aqueous fluid flowing upwards from the first hollow stem to be obstructed by the base of part B and overflow from the first hollow stem and fall on the base of part A and proceed linearly up into the ultraviolet transmissive tube through cross sectional area A6;
- exposing the stream of aqueous fluid to UV-light from the UV lamp as it flows through the ultraviolet transmissive tube; and
- discharging the disinfected aqueous fluid from the outlet.

The present invention provides a method wherein the aqueous fluid flows out of the streamlining module in plug flow.

The present method offers the advantage to effectively disinfect aqueous fluid at high throughput. Accordingly, in a preferred embodiment of the present method disinfected aqueous fluid is discharged from the device preferable at a rate of at least 1 L/min, more preferably at a rate of 1.8-2.5 L/min. These flow rates are typically achieved using a UV-lamp of 8-16 W, more preferably of 11-14 W.

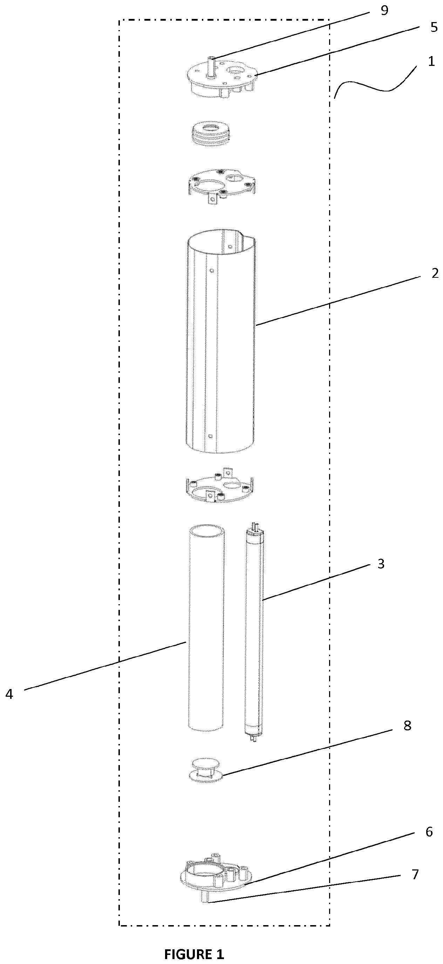

Figure 1 provides an exploded of the UV-treatment device (1) comprising: a housing (2), an ultraviolet lamp (3) contained within the housing (2); an ultraviolet transmissive tube (4) positioned adjacent to the ultraviolet lamp (3) through the housing for the passage of aqueous fluid therethrough; a top cover (5) and a bottom cover (6); an inlet (7) located at one end of housing (2); a streamlining module (8) in fluid communication with the inlet (7), an outlet (9) for discharging aqueous fluid located at the other end of the housing (2);

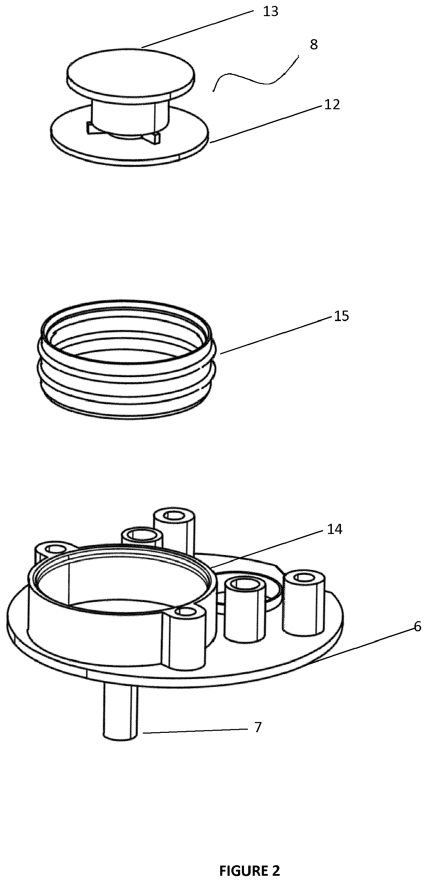

Figure 2 is an exploded view depicting positioning of the streamlining module. The streamlining module (8) comprises: an opening (10) for entry of water through the inlet (7); inter-engageable parts A (12) and B (13);

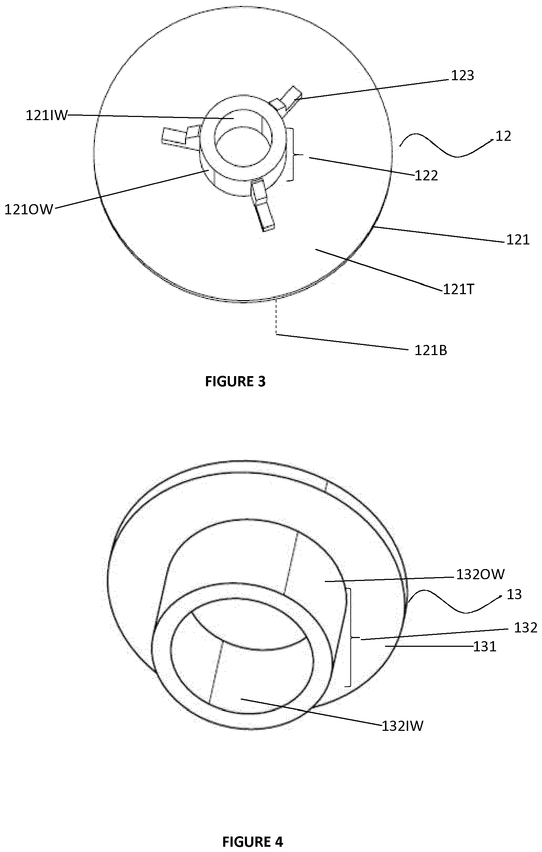

Figure 3 is the exploded view Part A of the streamlining module. Figure 3 part A (12) comprising a base (121) and a first hollow stem (122) and an obstructer (123), wherein the base (121) comprises a top face (121T) and a bottom face (121T), the bottom face (121B) rests on the opening (10) so as to allow passage of water from the opening (10) only through the streamlining module and wherein, the top face (121T) covers the UV transmissive tube (4) to allow passage of water into the UV transmissive tube (4) only through the streamlining module (8); and wherein first hollow stem (122) forms an extension of the inlet (7); wherein the first hollow stem (122) vertically extends upwards and comprises an outer (122OW) and an inner wall (122IW), and an obstructer (123) on the base and at foot of the outer wall (122OW) of the first hollow stem (122).
Figure 4 is the exploded view Part B of the streamlining module. Figure 4 shows part B (13) comprising a base (131) and a second hollow stem (132) having outer (132OW) and inner walls (132IW), vertically extending downwards from base (131), shaped to receive the first hollow stem (122) and rest on the obstructer (123).

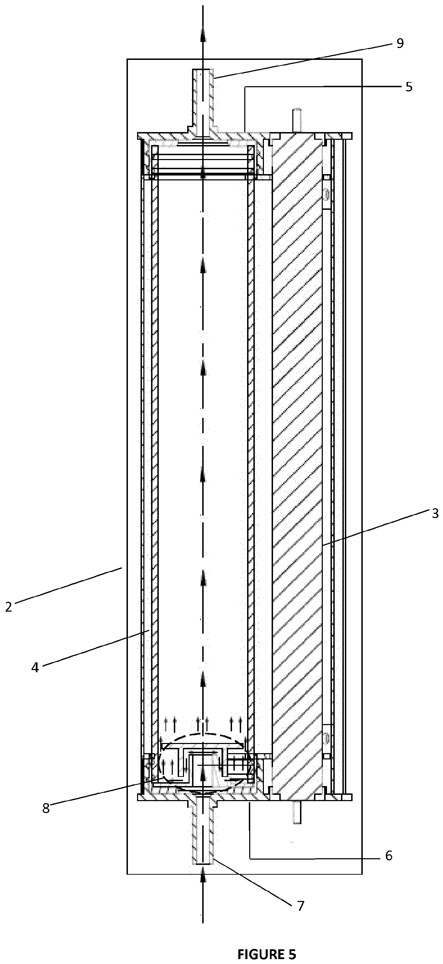

Figure 5 is the cross-sectional view of the UV-treatment device (1) according to the present invention.

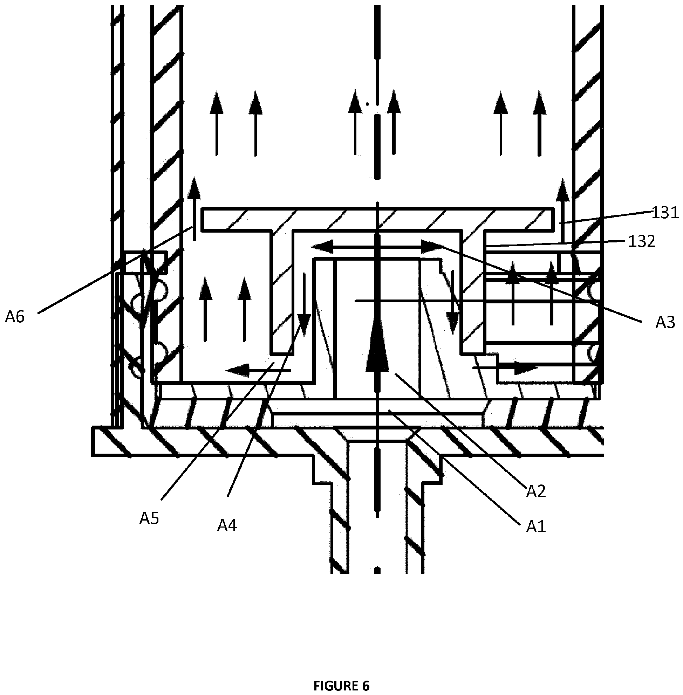

Figure 6 is the cross-sectional view of the part of the device (1) where streamlining module (8) is positioned and the Cross sections A1 to A6 are created. The shortest cross section between the outer wall of the first hollow stem (122OW) and inner wall of the second hollow stem (132IW) is shown to have a cross sectional area A4; the shortest cross section between the second hollow stem (132) and the base of the part A (121) is shown to have a cross sectional area A5; the shortest cross section between base of part B (131) and inner wall of the ultraviolet transmissive tube (4IW) is shown to have a cross sectional area A6.

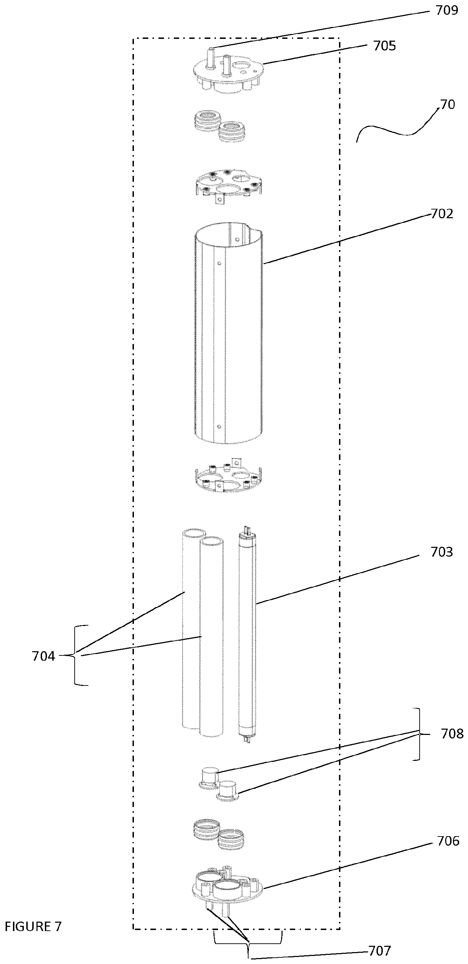

Figure 7 is an exploded view of another embodiment of the device (70) having two UV-transmissive tubes. Figure 1 shows a housing (702), an ultraviolet lamp (703) contained within the housing (702); two ultraviolet transmissive tubes (704) positioned adjacent to the ultraviolet lamp (703) through the housing (702) for the passage of aqueous fluid therethrough; a top cover (705) and a bottom cover (706); an inlet (707) located at one end of housing (702); two streamlining modules (708) in fluid communication with the inlet (707), an outlet (709) for discharging aqueous fluid located at the other end of the housing (702);

The invention is further illustrated by means of the following non-limiting examples.

### EXAMPLES

### Example 1

An UV treatment device according to the present invention as shown in Figures 1-4 was used to treat water that had been infected with bacteria (*K. terrigena*) and virus (MS2 bacteriophage). The device was fitted with a pre-filter (pleated fabric + carbon block) and a UV lamp (11 W, ex Osram). The performance of the device was compared with that of an identical device that lacked a streamlining module.

Characteristics of the UV-treatment device containing a streamlining module are summarized in Table 1.

**Table 1**

| Volume of the UV transmissive tube | 122719.4 mm³ |
|---|---|
| Length of UV transmissive tube | 199mm |
| Inner diameter of UV transmissive tube | 28mm |
| First hollow stem Diameter | ID 4.2mm |
| Second hollow stem Diameter | ID 6mm |
| Surface area of the bottom face of part A | 754.77mm² |
| Surface area of the top face of base of part B | 490.87mm² |
| Base of part A Diameter | OD 31mm |
| Base of Part B Diameter | OD 25mm |
| Cross Section A1 | 13.85mm² |
| Cross Section A2 | 28.27mm² |
| Cross Section A3 | 37.7 mm² |
| Cross Section A4 | 49.48 mm² |
| Cross Section A5 | 75.4 mm² |
| Cross Section A6 | 124.88 mm² |

Tests were conducted using different flow rates, different concentrations of contaminants and different spike points. The results are shown in Table 2.

**Table 2**

| | *K. terrigena* Log(cfu/100 ml) Input Output Δ | | | MS2 bacteriophage Log(pfu/ml) Input Output Δ | | | Flow rate (L/min.) | Spike Point (in L) |
|---|---|---|---|---|---|---|---|---|
| Without Streamlining Module | 8.4 | 2.5 | **5.9** | 5.4 | 2.2 | **3.2** | 2.8 | 0 |
| | 8.4 | 1.6 | 6.8 | 5.4 | 1.5 | **3.9** | 2.3 | 0 |
| | 8.4 | 0.3 | 8.1 | 5.4 | 0.8 | 4.6 | 1.9 | 0 |
| | 8.4 | 0.0 | 8.4 | 5.4 | 0.0 | 5.4 | 1.4 | 0 |
| Without Streamlining Module | 8.4 | 0 | 8.4 | 5.4 | 1.4 | 4 | 2.8 | 0 |
| | 8.4 | 0 | 8.4 | 5.4 | 0.9 | 4.5 | 2.3 | 0 |
| | 8.4 | 0 | 8.4 | 5.4 | 0 | 5.4 | 1.9 | 0 |
| | 8.4 | 0 | 8.4 | 5.4 | 0 | 5.4 | 1.4 | 0 |

The table 2 shows virus and bacterial kill with and without the streamlining module of the present invention. The data show that without the streamlining module the effective bacterial kill of about Log 6 and viral kill of about Log 4 is not achieved. Whereas with the streamlining module of the present invention the microbial kill rate is achieved throughout the life of the device. This shows that the streamlining module of the present invention provides a better exposure to the aqueous fluid to ensure higher microbial kill.

### Example 2

A UV treatment device according to the present invention as described in Example 1 was used to treat water that had been infected with bacteria (*K*. *terrigena*) and virus (MS2 bacteriophage). The performance of the device was compared to that of the device described in WO17186510.

Both the devices were fitted with a pre-filter (pleated fabric + carbon block) and a UV lamp (11 W, ex Osram).

The results of the tests are shown in Table 3.

**Table 3**

| | *K. terrigena* Log(cfu/100 ml) Input Output Δ | | | MS2 bacteriophage Log(pfu/ml) Input Output Δ | | | Flow rate (L/min.) | Spike Point (in L) |
|---|---|---|---|---|---|---|---|---|
| Device according to invention | 8.2 | 0 | 8.2 | 5.2 | 0 | 5.2 | 2.3 | 0 |
| | 7.4 | 0 | 7.4 | 5.4 | 0 | 5.4 | 2.0 | 1422 |
| | 7.2 | 0 | 7.2 | 5.4 | 0 | 5.4 | 1.98 | 3000 |
| | 8.5 | 0 | 8.5 | 5.6 | 1 | 4.6 | 1.72 | 4787 |
| Device According WO'510 | 8.2 | 0 | 8.2 | 5.2 | 0 | 5.2 | 1.96 | 0 |
| | 7.4 | 0 | 7.4 | 5.4 | 0 | 5.4 | 1.34 | 1421 |
| | 7.2 | 0 | 7.2 | 5.4 | 0 | 5.4 | 1.67 | 3000 |
| | 8.5 | 0.6 | 7.9 | 5.6 | 1.5 | 4.1 | 1.76 | 4703 |

The data of Table 3 show that the device of present invention performs at par or better with the device of WO17186510.

## Claims

1. An ultraviolet treatment device (1) for disinfecting aqueous fluid by exposing the fluid to ultraviolet (UV) light, said device (1) comprising:
• a housing (2),
• an ultraviolet lamp (3) contained within the housing (2);
• an ultraviolet transmissive tube (4) positioned adjacent to the ultraviolet lamp (3) in the housing (2) for the passage of aqueous fluid therethrough;
• a top cover (5) and a bottom cover (6);
• an inlet (7) located at one end of housing (2);
• a streamlining module (8) in fluid communication with the inlet (7),
• an outlet (9) for discharging aqueous fluid located at the other end of the housing (2); wherein the streamlining module (8) comprises:
- an opening (10) for entry of water through the inlet (7);
- inter-engageable parts A (12) and B (13);
∘ part A (12) comprising a base (121) and a first hollow stem (122),
wherein the base (121) comprises a top face (121T) and a bottom face (121T), the bottom face (121B) rests on the opening (10) so as to allow passage of water from the opening (10) only through the streamlining module and wherein, the top face (121T) covers the UV transmissive tube (4) to allow passage of water into the UV transmissive tube (4) only through the streamlining module (8); and
wherein first hollow stem (122) forms an extension of the inlet (7);
wherein the first hollow stem (122) vertically extends upwards and comprises an outer (122OW) and an inner wall (122IW);
∘ part B (13) comprising a base (131) and a second hollow stem (132) having outer (132OW) and inner walls (132IW), vertically extending downwards from base (131), shaped to receive the first hollow stem (122); and
∘ an obstructer (123) to prevent engagement of part A (12) and part B (13) in a manner which blocks flow of water through the streamlining module (8).

2. A device (1) according to claim 1, wherein the streamlining module (8), the part A (12) and the part B (13) are all either coaxial or positioned on a parallel axis with the ultraviolet transmissive tube (4).

3. A device (1) according to claims 1 or 2, wherein inner side of the housing (2) has a surface which is reflective.

4. A device according to claims 1 to 3, wherein the obstructer is positioned at junction on the base of part A and at foot of the outer wall (122OW) of the first hollow stem (122), such that the second hollow stem (132) rests on the obstructer.

5. A device (1) according to any of the preceding claims 1 to 4, wherein shortest cross section of the opening (10) of the streamlining module (8) has a cross sectional area A1.

6. A device (1) according to any of the preceding claims 1 to 5, wherein shortest cross section of the hollow of first stem (122) has a cross sectional area A2.

7. A device (1) according to any of the preceding claims 1 to 6, wherein shortest cross section of junction formed between the first stem (122) and the base of part B (131) has a cross sectional area A3.

8. A device (1) according to any of the preceding claims 1 to 7, wherein shortest cross section between the outer wall of the first hollow stem (122OW) and inner wall of the second hollow stem (132IW) has a cross sectional area A4.

9. A device according to any of the preceding claims 1 to 8, wherein shortest cross section between the second hollow stem (132) and the base of the part A (121) has a cross sectional area A5.

10. A device according to any of the preceding claims 1 to 9, wherein shortest cross section between the base of part B (131) and inner wall of the ultraviolet transmissive tube (4IW) has a cross sectional area A6.

11. A device according to any of the preceding claims from 5 to 10, wherein, A1 ≤ A2, A3, A4, A5 and A6.

12. A device (1) according to any of the preceding claims from 1 to 11, wherein the opening (10) of the streamlining module (8) is walled with a sleeve (14) which forms seat of the base of the part A of the streamlining module (121).

13. A device (1) according to claim 11, wherein, the sleeve (14) comprises a gasket (15).

14. A method of disinfecting aqueous fluid in a device (1) according to any of the preceding claims from 1 to 12, said method comprising the steps of:
• introducing a linear stream of aqueous fluid through the device inlet (7) for aqueous fluid into the opening (10) of the streamlining module (8) and through the first hollow stem (122);
• allowing the aqueous fluid flowing upwards from the first hollow stem (122) to be obstructed by the base of part B (131) and overflow from the first hollow stem (122) and fall on the base of part A (121) and proceed linearly up into the ultraviolet transmissive tube (4) through cross sectional area A6;
• exposing the stream of aqueous fluid to UV-light from the UV lamp (3) as it flows through the ultraviolet transmissive tube (4); and
• discharging the disinfected aqueous fluid from the outlet (9).

15. Use of the device (1) according to any of the preceding claims from 1 to 12 for providing purified water.
